Europäisches Patentamt

(19) European Patent Office

Office européen des brevets

(11) Veröffentlichungsnummer: **0 048 339**
**B1**

(12) **EUROPÄISCHE PATENTSCHRIFT**

(45) Veröffentlichungstag der Patentschrift:
**14.12.83**

(21) Anmeldenummer: **81106319.7**

(22) Anmeldetag: **13.08.81**

(51) Int. Cl.³: **C 09 K 3/32,** C 09 K 17/00,
**E 01 H 12/00**

(54) Verfahren zur Verhinderung des Eindringens bzw. des Anhaftens von Rohöl oder Erdöl-Kohlenwasserstoffen in bzw. auf Erden, Sanden oder Gegenständen.

(30) Priorität: **22.09.80 DE 3035685**

(43) Veröffentlichungstag der Anmeldung:
**31.03.82 Patentblatt 82/13**

(45) Bekanntmachung des Hinweises auf die Patenterteilung:
**14.12.83 Patentblatt 83/50**

(84) Benannte Vertragsstaaten:
**FR GB IT NL SE**

(56) Entgegenhaltungen:
**EP - A - 0 031 610**
**DE - A - 2 422 231**
**DE - A - 2 728 464**
**DE - A - 2 855 158**
**FR - A - 2 413 461**
**FR - A - 2 437 874**
**GB - A - 2 053 182**

(73) Patentinhaber: **WINTERSHALL AKTIENGESELLSCHAFT,**
**Postfach 10 40 20 Friedrich-Ebert-Strasse 160,**
**D-3500 Kassel (DE)**
Patentinhaber: **Gesellschaft für Biotechnologische Forschung mbH (GBF), Mascheroder Weg 1,**
**D-3300 Braunschweig-Stöckheim (DE)**

(72) Erfinder: **Lindörfer, Walter, Dr. Dipl.-Volkswirt,**
**Christian-Beyer-Strasse 16, D-3500 Kassel (DE)**
Erfinder: **Wagner, Fritz, Prof. Dr. Dipl.-Chem., Hohe Wiese 2, D-3301 Stöckheim (DE)**
Erfinder: **Schulz, Walther, Dr. Dipl.-Ing.,**
**Mozartstrasse 19, D-2848 Vechta (DE)**

Verfahren zur Verhinderung des Eindringens bzw. des Anhaftens von Rohöl oder Erdöl-Kohlenwasserstoffen in bzw. auf Erden, Sanden oder Gegenständen

Das in der deutschen Patentanmeldung P 29 11 016.5-25 beschriebene Verfahren löst die Aufgabe, eine auf der Meeresoberfläche schwimmende Ölschicht unter Verklumpung des Öles aufzureissen und das Öl damit in eine Form überzuführen, in der es mechanisch beseitigt werden kann. Zu diesem Zweck werden auf den auf der Meeresoberfläche schwimmenden Ölteppich Metaboliten von Mikroorganismen aufgebracht, welche die Ober- und Grenzflächenspannung des Systems Öl/wässrige Phase herabsetzen. Solche Metaboliten sind auch mikrobiell erzeugte Glycolipide, die als hydrophile Komponente Mono-, Di- bzw. Oligo-Saccharide enthalten. Derartige Glycolipide bewirken letztlich eine Verklumpung des auf der Oberfläche von Wasser schwimmenden Öles.

Weiterhin sind in der DE-A 28 43 685 ein Verfahren und eine Vorrichtung beschrieben, mit denen Öle oder Erdöl-Kohlenwasserstoffe aus festen oder fest-flüssigen Materialien dadurch abgetrennt werden, dass diese ölhaltigen Gemische mit einer wässrigen Lösung oder Dispersion von mikrobiell erzeugten Glycolipiden zu einer Trübe vermischt werden, von der die aus der wässrigen Phase aufsteigende Ölphase abgetrennt wird.

Beide vorbekannten Verfahren dienen demnach dazu, eine bereits eingetretene Ölverschmutzung von Wasser, Erden oder Sanden nachträglich zu beseitigen.

Es verblieb somit die Aufgabe, präventive Schutzmassnahmen zu finden, die es verhindern, dass Rohöl oder Erdöl-Kohlenwasserstoffe in Erden, Sande oder Gegenstände, wie beispielsweise Mauerwerk, überhaupt erst eindringen.

Es wurde ein Verfahren zur Verhinderung des Eindringens bzw. Anhaftens von Rohöl oder Erdöl-Kohlenwasserstoffen in bzw. auf Erden, Sanden oder Gegenständen durch Anwendung wässriger Lösungen oder Dispersionen von oberflächenaktiven Wirkstoffen gefunden, nach dem die Erden, Sande oder Gegenstände, bevor sie mit dem Rohöl oder den Erdöl-Kohlenwasserstoffen in Berührung kommen, mit einer wässrigen Lösung oder Dispersion von Glycolipiden in dünner Schicht besprüht werden und die infolge des Kontakts der so vorbehandelten Erden, Sande oder Gegenstände entstehende ölhaltige Masse mit einem Druckwasserstrahl von der Oberfläche abgespritzt und bei grösseren Mengen an ölhaltigen Massen von dem Ablauf mechanisch getrennt und gesammelt oder bei geringerer Menge biologisch abgebaut werden.

Es ist überraschend, dass die in Wasser gelösten bzw. dispergierten Glycolipide in feiner Verteilung auf den Oberflächen von Erden, Sanden oder Gegenständen, wie beispielsweise erdigen, steinigen oder felsigen Küsten- oder Uferregionen, sandigen Stränden, gemauerten oder hölzernen Küsten- oder Uferbefestigungen oder Hafenanlagen und Gebäuden in Küstennähe aufzubringen sind und dort an der Oberfläche verbleiben.

Die in dünner Schicht auf die Oberfläche der vorgenannten festen Materialien in wässriger Phase erfindungsgemäss aufgesprühten Glycolipide verhindern jedoch das Eindringen der später aufziehenden Rohöle bzw. Erdöl-Kohlenwasserstoffe in diese Oberfläche ebenso wie das feste Haften dieser Rohöle bzw. Erdöl-Kohlenwasserstoffe an diesen Oberflächen, wobei es unerheblich ist, ob die Rohöle bzw. die Erdöl-Kohlenwasserstoffe als unvermischte Phase oder in Form eines Öl-Wassergemisches auf den Oberflächen der genannten und erfindungsgemäss vorbehandelten Materialien ankommen; dadurch läuft der überwiegende Anteil des ankommenden Öles bzw. Ölwassergemisches von den genannten Oberflächen ab und kann in bekannter Weise behandelt werden.

Die auf die mit Glycolipiden vorbehandelte Oberfläche aufgezogenen Rohöle bzw. Erdöl-Kohlenwasserstoffe werden erfindungsgemäss mit einem Druckwasserstrahl von diesen Oberflächen abgespritzt, wofür Süss- oder Seewasser eingesetzt werden kann. Durch das Ablösen der Glycolipide von den Oberflächen der festen Materialien wird offenbar die volle Adsorptionskraft der Glycolipide zur Ölphase wieder frei, die sekundär eine Verklumpung der Rohöle bzw. Erdöl-Kohlenwasserstoffe bewirkt. Die verklumpte Ölphase kann dann aus dem Ablauf des aufgespritzten Druckwassers mechanisch gesammelt werden. Es ist jedoch auch möglich, den Ablauf des Druckwasserstrahls zusammen mit der Ölphase in einen grösseren Wasservorrat, wie beispielsweise in das Meer, in Küstengewässer oder Seen einzuleiten und die daraus aufschwimmende ölhaltige Masse abzusammeln oder abzusaugen. Geringere Mengen erfindungsgemäss abgespritzter ölhaltiger Massen verklumpen zu kleinen, von den Glycolipiden umhüllten tröpfchenförmigen Teilchen, die nach dem Einspülen in natürliche Gewässer von den dort vorhandenen Mikroorganismen biologisch abgebaut werden.

Die erfindungsgemäss einzusetzenden Glycolipide können durch chemische oder mikrobielle Synthese oder durch Extraktion von biologischem Material gewonnen werden. Besonders geeignet sind Glycolipide, die als hydrophilen Bestandteil Mono-, Di- oder Oligo-Saccharide enthalten. Diese Glycolipide ergeben Lösungen oder Dispersionen mit niedrigerer Viskosität als Poly-Saccharide.

Für die Durchführung des Verfahrens der Erfindung ist es vorteilhaft, zunächst eine wässrige Lösung bzw. Dispersion herzustellen, die die Glycolipide in einer Konzentration von 0,1 bis 5,0 g/l enthält und diese Vormischung dann dem Sprühwasser in solchen Mengen zuzumischen, dass die Glycolipide in dem Sprühwasser in einer Konzentration von 0,01 bis 1,0 mg/l vorliegen. Zur Verbesserung der Verteilung der Glycolipide in dem wässrigen Medium hat es sich bewährt, die wässrige Lösung bzw. Dispersion der Glycolipide vor dem Aufsprühen mit Ultraschall zu behandeln.

Die wässrige Vormischung mit einem Gehalt an Glycolipiden von 0,1 bis 5,0 g/l kann dem Sprühwasser auch in einem Beipass so zudosiert werden, dass der Sprühstrahl die Glycolipide in einer Konzentration von 0,01 bis 1,0 mg/l enthält.

Beim Versprühen der erfindungsgemäss einzusetzenden wässrigen Lösung oder Dispersion von Glycolipiden in grossflächiger Verteilung ist es vorteilhaft, wenn der Sprühstrahl beim Versprühen vom Boden aus im flachen, aufsteigenden Winkel und beim Versprühen aus der Luft, beispielsweise aus einem Flugzeug, im flachen, fallenden Winkel auf die zu behandelnden Flächen gerichtet ist. Dadurch wird erreicht, dass die wässrige Lösung oder Dispersion der Glycolipide praktisch mit der Schwerkraft auf die zu behandelnden Flächen auftrifft und auf diesen im wesentlichen an der Oberfläche haftet oder nur in geringe Tiefe eindringt und dadurch dem auftreibenden Öl das Eindringen verwehrt.

Das Versprühen der erfindungsgemäss einzusetzenden Lösungen oder Dispersionen kann mittels beweglicher Sprühgeräte durchgeführt werden, die in Landfahrzeugen, Booten oder Flugzeugen installiert sein können.

Eine besonders gleichmässige und feine Verteilung der erfindungsgemäss anzuwendenden Glycolipid-Lösungen bzw. -Dispersionen auf den zu behandelnden Flächen wird erreicht, wenn der Sprühstrahl als Sprühnebel aus feinsten Tröpfchen verteilt wird.

Um eine schnelle Realisierung des Verfahrens der Erfindung zu gewährleisten, können an gefährdeten Orten, insbesondere in der Nähe der Fahrrouten von Öltankern oder in Häfen und dergleichen, Depots mit festen Glycolipiden, vorzugsweise in Form ihrer Konzentrate, angelegt werden, deren Einsatz gemäss der Erfindung bei Meldung und dem Eintreten von Ölunfällen rechtzeitig möglich ist.

Mit der Erfindung kann präventiv das Eindringen oder das Anhaften von Rohöl oder Erdöl-Kohlenwasserstoffen in bzw. an Oberflächen von Erden, Sanden und Gesteinen und Felsen ebenso verhindert werden wie in bzw. an Bauwerken aus Stein, Beton oder Holz, die insbesondere der Verkleidung und Befestigung von Uferflächen oder Häfen dienen. Wenn auf die erfindungsgemäss vorbehandelten Flächen Rohöl oder Erdöl-Kohlenwasserstoffe aus den angrenzenden Gewässern aufziehen, so bietet die Erfindung die technisch vorteilhafte Möglichkeit, diese einfach mit Druckwasser abzuspülen und gegebenenfalls vom Wasser mechanisch abzutrennen. Bei geringen Mengen aufgezogenen Rohöls bzw. Erdöl-Kohlenwasserstoffe ergibt sich der weitere technische Vorteil, dass die die Öltröpfchen umhüllenden Glycolipide als Metabollite von Mikroorganismen die Verwertung des Öls durch die insbesondere im Meerwasser vorhandenen Mikroorganismen insofern begünstigen, als sie diesen Mikroorganismen als leicht verfügbare Kohlenstoffquelle dienen. Das Verfahren der Erfindung verwendet ausserdem nur natürlich vorkommende nicht-toxische Substanzen, so dass eine langfristige Störung des ökologischen Gleichgewichts in den behandelten Flächen vermieden wird.

**Patentansprüche**

1. Verfahren zur Verhinderung des Eindringens bzw. des Anhaftens von Rohöl oder Erdöl-Kohlenwasserstoffen in bzw. auf Erden, Sanden oder Gegenständen durch Anwendung wässriger Lösungen oder Dispersionen von oberflächenaktiven Wirkstoffen, dadurch gekennzeichnet, dass die Erden, Sande oder Gegenstände, bevor sie mit dem Rohöl bzw. den Erdöl-Kohlenwasserstoffen in Berührung kommen, mit einer wässrigen Lösung oder Dispersion von Glycolipiden in dünner Schicht besprüht werden und die infolge des Kontakts der so vorbehandelten Erden, Sande oder Gegenstände mit Rohöl oder Erdöl-Kohlenwasserstoffen entstehende ölhaltige Masse mit einem Druckwasserstrahl von der Oberfläche abgespritzt und bei grösserer Menge an ölhaltigen Massen von dem Ablauf mechanisch abgetrennt und gesammelt oder bei geringerer Menge biologisch abgebaut wird.

2. Verfahren nach Anspruch 1, dadurch gekennzeichnet, dass das abgespritzte Gemisch aus ölhaltigen Massen und glycolipidhaltigem Wasser in einen grösseren Wasservorrat eingeleitet und die aufschwimmenden ölhaltigen Massen davon abgesammelt oder -gesaugt werden.

3. Verfahren nach den Ansprüchen 1 und 2, dadurch gekennzeichnet, dass eine wässrige Lösung oder Dispersion von Glycolipiden eingesetzt wird, die durch chemische oder mikrobielle Synthese oder durch Extraktion von biologischem Material erzeugt worden sind.

4. Verfahren nach den Ansprüchen 1 bis 3, dadurch gekennzeichnet, dass die wässrige Lösung bzw. Dispersion der Glycolipide vor dem Aufsprühen mit Ultraschall behandelt wird.

5. Verfahren nach den Ansprüchen 1 bis 4, dadurch gekennzeichnet, dass die wässrige Lösung oder Dispersion dem wässrigen Sprühstrahl im Beipass in einer Konzentration von 0,1 bis 5 g/l zur Einstellung einer Konzentration im Sprühstrahl von 0,01 bis 1 mg/l zudosiert wird.

6. Verfahren nach den Ansprüchen 1 bis 5, dadurch gekennzeichnet, dass der zur grossflächigen Verteilung der wässrigen Lösung oder Dispersion der Glycolipide verwendete Sprühstrahl beim Versprühen vom Boden im flachen, aufsteigenden Winkel und beim Versprühen aus der Luft im flachen, fallenden Winkel auf die zu behandelnde Fläche gerichtet wird.

7. Verfahren nach den Ansprüchen 1 bis 6, dadurch gekennzeichnet, dass der Sprühstrahl der wässrigen Lösung oder Dispersion der Glycolipide als Sprühnebel aus feinsten Tröpfchen versprüht wird.

**Revendications**

1. Procédé destiné à empêcher la pénétration ou l'adhésion d'huile brute ou d'hydrocarbures de pétrole dans ou sur la terre, le sable ou des objets par utilisation de solutions ou dispersions aqueuses d'agents tensio-actifs, caractérisé en ce que la terre, le sable ou les objets, avant d'entrer en contact avec l'huile brute ou les hydrocarbures de pétrole, sont aspergés d'une mince couche de solution ou dispersion aqueuse de glycolipides et que la masse huileuse résultant du contact de la terre, du sable et des objets ainsi traités avec l'huile brute ou les hydrocarbures de pétrole est éliminée de la surface par un jet d'eau sous pression, puis séparée et recueillie mécaniquement si la quantité de masse huileuse est importante ou dégradée biologiquement s'il s'agit d'une quantité plus faible.

2. Procédé suivant la revendication 1, caractérisé en ce que le mélange des masse huileuse et d'eau contenant des glycolipides, éliminé au jet, est acheminé dans un grand réservoir d'eau, où la masse huileuse flottant en surface est recueillie ou aspirée.

3. Procédé suivant l'une des revendications 1 et 2, caractérisé en ce que l'on utilise une solution ou dispersion aqueuse de glycolipides obtenue par synthèse chimique ou microbienne ou par extraction de matière biologique.

4. Procédé suivant l'une quelconque des revendications 1 à 3, caractérisé en ce que la solution ou dispersion aqueuse de glycolipides est traitée aux ultrasons avant d'être pulvérisée.

5. Procédé suivant l'une quelconque des revendications 1 à 4, caractérisé en ce que la solution ou dispersion aqueuse est additionnée en by-pass au jet de pulvérisation aqueux, avec une concentration de 0,1 à 5 g/l, de manière à obtenir dans le jet de pulvérisation une concentration de 0,01 à 1 mg/l.

6. Procédé suivant l'une quelconque des revendications 1 à 5, caractérisé en ce que le jet de pulvérisation utilisé pour répartir sur une grande surface la solution ou dispersion aqueuse de glycolipides est dirigé sur la surface à traiter suivant un angle plat ascendant en cas de pulvérisation par le bas ou suivant un angle plat descendant en cas de pulvérisation par le haut.

7. Procédé suivant l'une quelconque des revendications 1 à 6, caractérisé en ce que le jet de pulvérisation de la solution ou dispersion aqueuse de glycolipides est constitué d'un brouillard de très fines gouttelettes.

## Claims

1. Process for preventing the penetration or adhesion of crude oil or petroleum hydrocarbons into or onto soils, sands or objects by the use of aqueous solutions or dispersions of surface-active substances, characterized in that the soils, sands or objects are sprayed with a thin coating of an aqueous solution or dispersion of glycolipids before coming into contact with the crude oil or petroleum hydrocarbons and that the oil-containing mass resulting from the contact of the soils, sands or objects treated in this way with crude oil or petroleum hydrocarbons is sprayed off the surface with a jet of pressurized water and, with larger quantities of oil-containing masses, is mechanically separated and collected from the discharge or, with smaller quantities, is biologically degraded.

2. Process according to Claim 1, characterized in that the sprayed-off mixture of oil-containing masses and glycolipid-containing water is conducted into a substantial water reservoir and the oil-containing masses floating to the surface are collected or sucked off.

3. Process according to Claims 1 and 2, characterized in that an aqueous solution or dispersion of glycolipids is used which has been produced by chemical or microbial synthesis or by extraction of biological material.

4. Process according to Claims 1 to 3, characterized in that the aqueous solution or dispersion of glycolipids is treated ultrasonically before spraying.

5. Process according to Claims 1 to 4, characterized in that the aqueous solution or dispersion is metred into the aqueous spray jet in the bypass at a concentration of 0.1 to 5 g/l to obtain a concentration of 0.01 to 1 mg/l in the spray jet.

6. Process according to Claims 1 to 5, characterized in that the spray jet used for wide distribution of the aqueous solution or dispersion of glycolipids is directed onto the surface to be treated at a shallow ascending angle when sprayed from the ground and at a shallow descending angle when sprayed from the air.

7. Process according to Claims 1 to 6, characterized in that the spray jet of the aqueous solution or dispersion of glycolipids is sprayed in the form of a spray mist of superfine droplets.